# EUROPEAN PATENT SPECIFICATION

(11) **EP 1 236 428 B1**
(45) Date of publication and mention of the grant of the patent: **06.10.2004**
(21) Application number: 01500052.4
(22) Date of filing: 01.03.2001
(51) Int. Cl.: A47J 45/07

(54) **Kettle with dismountable handle**
Kessel mit abnehmbarem Griff
Casserole avec poignée amovible

(43) Date of publication of application: 04.09.2002
(73) Proprietor: Marcos Larranaga y Cia, S.A., 20570 Bergara (Guipuzcoa) (ES)
(72) Inventor: Larranaga Cortabarria, Miguel Angel, 20570 Bergara, Guipuzcoa (ES)
(74) Representative: Toro Gordillo, Ignacio Maria

(56) References cited:
- EP-A- 0 209 461
- WO-A-00/21422
- JP-A- 2001 037 655
- US-A- 3 798 706

## Description

### OBJECT OF THE INVENTION

The present invention refers to a kettle or kitchen container of the type incorporating a dismountable holder to simplify handling thereof.

The object of the invention is to obtain a kettle which without the holder may be used as a conventional saucepan with metallic handles and which with the use of said holder allows any type of handling similar to a conventional kettle with a fixed holder.

### BACKGROUND OF THE INVENTION

Kettles with dismountable holders have been known throughout the centuries, since this dismountable feature of the holder offers two obvious and basic advantages. On the one hand, it allows the holder to be uncouples from the kettle whilst on the stove to avoid burns and the resulting deterioration thereof, and on the other hand, its dismountable nature simplifies storage, reducing the volumetric occupation required by it.

There are countless solutions regarding the coupling/uncoupling means of a holder to a kettle, but all of them have a common denominator, based on two factors:
- When the holder is uncoupled from the kettle, it is left without handles permitting a temporary handling thereof without holder.
- It must be mentioned European Patent EP0109461 and PCT WO00/21422.
- The coupling/uncoupling means for the holder are either extremely complicated or only assure the due stability for the kettle when this is subjected to the normal movement of raising and lowering, said coupling being unstable before side swinging manoeuvres for the assembly, like for example the direct pouring of the kettle contents.

It is also worth mentioning US-3,798,706 regarding a dismountable handle for domestic utensils, in which the domestic utensil, preferably a frying pan, is provided with two metallic projections in diametral opposition, being able to couple a handle to either one of the projections, such that in addition to permitting an easy and quick coupling for the handle, it permits its laterally tilting, even overturning the frying pan, but, however, the two metallic projections provided in this patent have such reduced dimensions that they do not allow the use thereof as manual gripping elements, especially in the preferred practical embodiment example of said patent in which the recipient is materialized in a frying pan, since such reduced dimensions imply a drawback of direct manual contact with the frying pan body, with the consequent burns this would imply.

More specifically, European Patent EP 0 209 461 discloses a detachable holder for pans, for which it provides the existence in the pan of a small metallic coupling ring for coupling the handle which, in the absence of the latter, does not constitute a handle which allows directly handling the pan, due to its reduced dimensions as well as the inexistence of a ring which is opposite the first ring, allowing the use of both hands.

Similar performances are provided by the detachable holder for pans object of WO 00/21422, the only exception in this case being that the ring in the aforementioned European Patent is carried out in a perforated plate fixed to the body of the pan by screwing it on, but said pan incorporates a single plate also having very reduced dimensions, preventing its use as a direct manual handle.

It is also worth pointing out that US patent 3,798,706 consisting of a frying pan also provided with a detachable holder, and although in this case the body of the frying pan incorporates two pins for optionally fixing the handle, which pins are duly solidly attached to the pan and in diametral opposition, the presence of these two pins has the specific purpose of facilitating access to the closest one for coupling the handle in order to not have to directly handle the body of the frying pan for turning it, precisely because of the high temperature the frying pan reaches, these pins having such reduced dimensions that their use as direct manual-action handles is not plausible.

### DESCRIPTION OF THE INVENTION

The kettle proposed by the invention (cf. claim 1) satisfactorily solves the aforementioned drawbacks in the different aspects.

Therefore, more specifically and as from a body for the kettle with any suitable shape according to one of the features of the invention, said body duly incorporates interlocked to it, two metal handles which may be indistinctly used to fix the holder but may also be used as conventional handles for a temporary handling of the kettle without holder, as a conventional saucepan.

Each one of these handles is made from a stamped "U" shaped plate whose middle horizontal branch is horizontally flattened, incorporating in its central zone a small arched dimpling with upper convexity and incorporating in said dimpling a rectangular radially lengthened window with respect to the kettle body and intended to constitute the interlocking means for a blocking trigger fitted in the holder.

On the other hand, the holder is made by means of two parts which may coupled to each other with the aid of screws to define a basically hollow holder fits in said window due to the effect of a spring which tends to displace it in this direction, and against which the trigger is displaceable to unlock the handle with the aid of a button fitted in the holder body.

Therefore and according to that mentioned above, the coupling of the holder to the kettle is carried out over either of the handles of the latter by simple radial and longitudinal displacement of the holder with respect to the kettle, the handle bridge penetrating in the front groove of the handle, obliging side and automatic swinging of the trigger, thanks to an inclined plane existing opposite the latter and automatically reaching the limit locking situation, in which the holder and metallic handle and hence, holder and kettle remain totally immobilised with respect to each other whilst for the unlocking manoeuvre it is sufficient to act over the press-button to free the trigger and as a result to uncouple the holder from the metallic handle joint to the kettle. Further preferred embodiments are disclosed in dependent claims 2 and 3.

### DESCRIPTION OF THE DRAWINGS

To complete the description being made and with the purpose of providing a better understanding of the features of the invention according to a preferred practical embodiment thereof, a set of drawings is accompanied to said description as an integral part thereof, where with an illustrative and non-limiting character the following are shown:

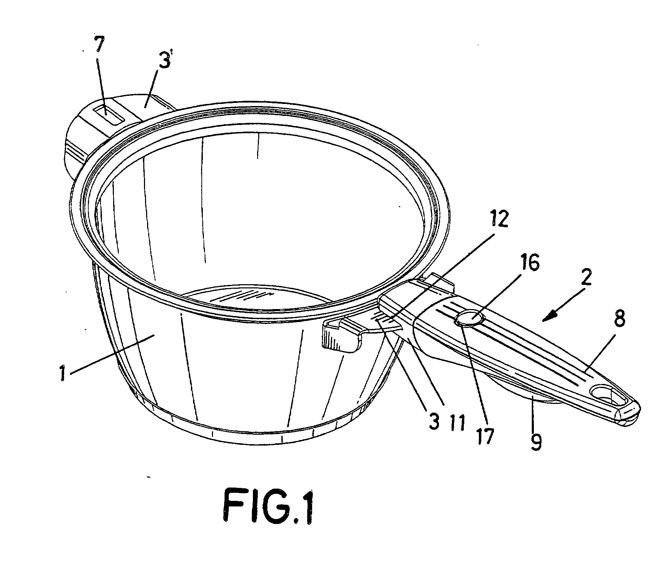

Figure 1 shows a perspective view of a kettle with a dismountable holder made in accordance with the object of the present invention.

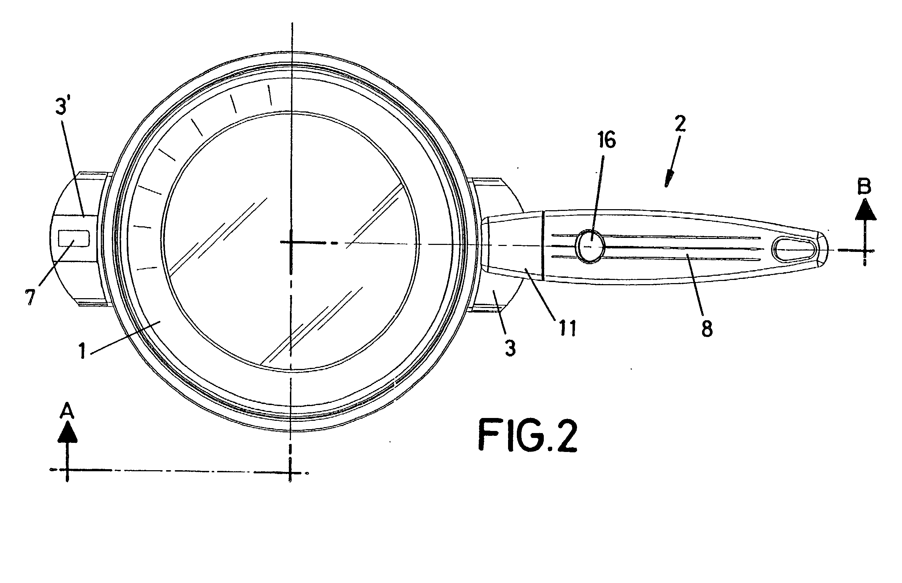

Figure 2 shows a plan view of the same kettle.

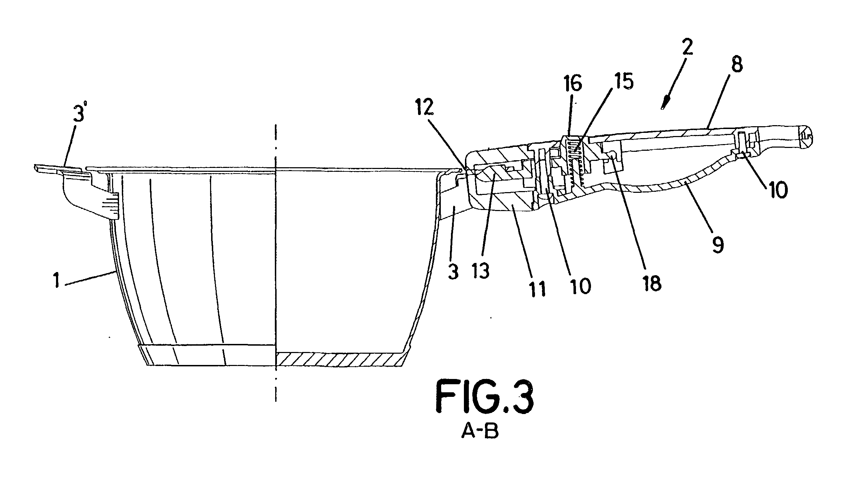

Figure 3 shows a side elevation view and a sectional view of the set of previous drawings, according to the cutting line A-B of figure 2.

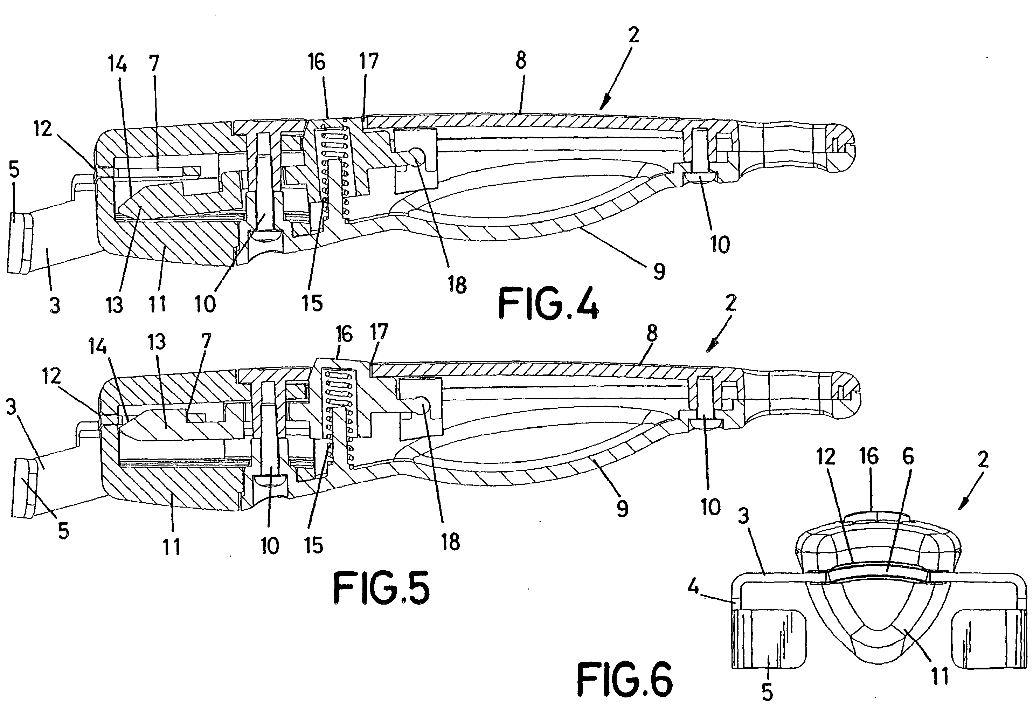

Figure 4 shows an extended detail of Figure 3, corresponding to the holder, likewise sectioned, in the unlocked position for the metallic handle which appears uncoupled from the kettle body.
Figure 5 shows a similar section to that of the previous figure of the same set, but now in a locking situation for the handle.
Figure 6 finally shows an axial view of the set represented in Figure 5 along the inside end of the holder, which couples to the metallic handle of the kettle.

### PREFERRED EMBODIMENT OF THE INVENTION

In the light of the figures shown, it may be observed how the body (1) of the kettle incorporates as fixing means for the holder (2), two metallic handles (3-3') in diametric opposition, which due to their own configuration may be used as conventional handles, temporarily and so that either of them may receive the holder (2) in an interlocked way.

Each one of the handles (3-3') is made of a robust die-stamped plate, forming a kind of "U" shaped bridge whose side branches (4) have at their free ends internal elbows (5) for their fastening by welding to the kettle body (1), so that said handles (3-3') remain immovably fixed to said body.

In the middle branch or bridge of the handles (3-3'), a slightly curved dimpling (6) is made at the central level in which a rectangular window (7) is located, which is radially lengthened with respect to the body (1) of the kettle and is intended to fix the handle (2) as will be seen below.

On the other hand, the handle (2) is made by means of two parts or semi-housings, an upper one (8) and a lower one (9) which may be coupled to each other to form a hollow body and fixable to each other with the aid of screws (10), the upper part (8) having at its internal end a head (11) which is extended until the lower level of the holder and which has a groove (12), both in its front and side faces, formally and dimensionally suitable to permit the adjusted coupling of the transverse bridge of either of the handles (3-3'), the carrier of the rectangular window (7) which remains integrally housed inside the cavity of the head (11) and accordingly, of the holder (2).

Within the head (11) there is a locking trigger (13) which may be coupled in the rectangular window (7), provided with a chamfered front (14) to facilitate its automatic swinging in the coupling manoeuvre, specifically against the tension of a spring (15) located in the lower part (9) of the holder (2) and a mono-block press-button (16) with the trigger (13) itself, emerging outside through a window (17) of the upper part (8) and swinging over the latter across a hinge (18), so that in the rest position, the press-button (16) tends to be projected outside due to the effect of the spring (15), as shown in Figure 5, a position in which the trigger (13) also adopts an upper limit situation and from this situation the holder may be coupled to the kettle by plugging inside the former either of the handles (3) of the latter. This plugging produces the descending swinging of the trigger (13) on affecting over it the front edge of the handle (3) and the later resilient recovery of said trigger (13) due to the effect of the spring (15), being interlocked in the rectangular window (7) of the handle (3) and the kettle and holder remaining perfectly fixed to each other in spite of any type of manoeuvre, whilst the push-button (16) is not activated, which makes the trigger (13) swing so that it abandons the window (7) of the metallic handle (3), permitting release of the holder (2).

## Claims

1. A kettle with a dismountable holder (2), constituted of a body (1) which incorporates two metallic handles (3-3') duly welded to its side wall and near its mouth, provided with means for detachably fixing the holder (2) to either one of them, **characterized in that** each one of said metallic handles (3) consists of a "U"-shaped die-stamped plate provided with end elbows (5) on its side branches (4) for adapting and fixing them by welding to the side wall of the kettle body (1), the middle branch of said plates (3) configuring a horizontal bridge which is dimensionally suitable for its manual gripping, in which a small curved dimpling (6) is centrally defined, having an upwardly oriented convexity, in which a rectangular window (7) is placed which is arranged radially with regard to the kettle body (1).

2. A kettle with a dismountable holder according to claim 1, **characterized in that** the holder (2) is hollow and incorporates a groove (12) on its inner end for access of the transversal bridge of any one of the metallic handles (3-3') to its interior, and in said hollow interior there is a trigger (13) which can be coupled in the window (7), said trigger (13) swinging inside the holder (2) against the tension of a spring (15) and by means of an outside push-button (16).

3. A kettle with a dismountable holder according to claim 2, **characterized in that** the holder (2) is formed by means of two parts (8) and (9) which can be fixed by means of screws (10), of which parts, the upper part (8) is finished at its internal end in a head (11) in which the access groove (12) for the metallic handle (3) of the kettle is arranged and in which the locking trigger (13) moves, having a chamfered front (14) of incidence for the front edge of the metallic handle (3) in order to achieve the automatic coupling of the holder (2) to the kettle by simple plugging-in of the latter, said trigger (13) being interlocked with the actuation push-button (16) which emerges to the outside through a window (17) of the upper part (8) and inside houses the spring (15) which, resting on the lower part (9), tends to outwardly project it.

## Patentansprüche

1. Topf mit abnehmbaren Stiel (2), gebildet aus einem Körper (1), der metallische Henkel (3-3') einschließt, die an seine Seitenwand und in der Nähe der Topföffnung sachgerecht verschweißt sind, wobei die Henkel mit Mitteln zur abnehmbaren Befestigung des an einer beliebigen der Beiden koppelbaren Stieles (2) versehen sind, **dadurch gekennzeichnet, dass** jeder der besagten metallischen Henkel (3) aus einem gestanzten Blech mit einer "U"-förmigen Gestaltung besteht, das in seinen seitlichen Zweigen (4) an ihren Enden mit Kröpfungen (5) zu ihrer Anpassung und Befestigung an der Seitenwand des Körpers (1) des Topfes durch Schweißen versehen sind, wobei der mittlere Zweig dieser Bleche (3) eine horizontale Brücke bildet, die zum Greifen mit der Hand geeignet bemessen sind, in welcher mittig eine kleine bogenförmige kleine Tiefung (6) mit einer nach oben gerichteten Konvexität bestimmt ist, in welche sich eine rechteckige Öffnung (7) befindet, die bezüglich des Körpers (1) der Pfanne radial angeordnet ist.

2. Topf mit abnehmbaren Stiel (2) nach Anspruch 1, **dadurch gekennzeichnet, dass** der Stiel (2) hohl ist und in seinem inneren Ende eine Nut (12) einschließt, die für die Einführung der Querbrücke von einer beliebigen der metallischen Henkel (3-3') in sein Inneres bestimmt ist, und im besagten hohlen Inneren bewegt sich eine an der Öffnung (7) koppelbare Klinke (13), wobei diese Klinke (13) im Hohlraum des Stieles (2) gegen die Spannung einer Feder (15) und durch einen äußeren Druckknopf (16) kippbar ist.

3. Topf mit abnehmbaren Stiel (2) nach Anspruch 2, **dadurch gekennzeichnet, dass** der Stiel (2) aus zwei Teilen (8) und (9) gestaltet ist, die mittels Schrauben (10) befestigt werden können, wobei das obere Teil (8) der beiden Teilen an seinem inneren Ende mit einem Kopfteil (11) endet, in welchem die Nut (12) zur Einführung des metallischen Henkels (3) des Topfes ausgeführt ist und sich die Sperrklinke (13) bewegt, der eine abgeschrägte Einwirkungsstirnseite für den Stirnrand des metallischen Henkels (3) aufweist, um die automatische Kopplung des Stieles (2) am Topf durch die einfache Einführung des Stieles zu erreichen, wobei diese Klinke (13) mit dem Betätigungsdruckknopf (16) einteilig ausgeführt ist und dieser durch eine Öffnung (17) des oberen Teiles (8) nach außen hinausragt und in seinem Hohlraum die Feder (15) aufnimmt, die durch das Stützen auf dem unteren Teil (9) dazu neigt, ihn nach außen hin zu befördern.

## Revendications

1. Casserole à manche (2) démontable, constitué à partir d'un corps (1) incorporant des anses métalliques (3-3') dûment soudées à sa paroi latérale et aux proximités de son embouchure, pourvues de moyen de fixation à caractère démontable du manche (2) accouplable à l'une quelconque de celles-ci, **caractérisé en ce que** chacune desdites anses (3) métalliques consiste en une plaque formée à la presse ayant une configuration sous forme de "U", pourvue sur ses branches (4) latérales de coude (5) extrêmes pour leur adaptation et fixation par soudure à la paroi latérale du corps (1) de la casserole, la branche médiane desdites plaques (3) configurant un pont horizontal dimensionnellement adéquat pour sa saisie manuelle, où est défini, d'une manière centrale, un petit emboutissage (6) courbé, qui a une convexité orientée vers le haut, où est situé une fenêtre (7) rectangulaire qui demeure disposée de manière radiale par rapport au corps (1) de la casserole.

2. Casserole à manche démontable, selon la revendication 1, **caractérisé en ce que** le manche (2) est creux et qu'il incorpore à son extrémité intérieure une rainure (12) pour l'accès à son intérieur de la part du pont transversal de l'une quelconque des anses (3-3') métalliques, et dans ledit intérieur creux un cran (13) de sûreté accouplable a du jeu sur la fenêtre (7), ledit cran de sûreté (13) basculant au sein du manche (2) à l'encontre de la contrainte d'un ressort (15) et au moyen d'un poussoir (16) extérieur.

3. Casserole à manche démontable, selon la revendication 2, **caractérisé en ce que** le manche (2) est structuré au moyen de deux pièces (8) et (9) pouvant se fixer au moyen de vis (10), la pièce supérieure (8) de ces pièces étant coiffée à son extrémité interne d'une tête (11), dans laquelle est établie la rainure (12) d'accès pour l'anse métallique (3) de la casserole et dans laquelle le cran (13) de sûreté a du jeu, lequel présente une partie frontale (14) biseauté d'incidence pour le bord frontal de l'anse (3) métallique pour obtenir l'accouplement automatique du manche (2) à la casserole par une simple insertion de ce dernier, le cran de sûreté (13) et le poussoir (16) d'actionnement étant monobloc, ce dernier émergeant à l'extérieur à travers une fenêtre (17) de la pièce (8) supérieure et il reçoit en son sein le ressort (15) qui, en appui sur la pièce (9) inférieure tend à le projeter vers l'extérieur.
